# EUROPEAN PATENT APPLICATION

(11) **EP 4 757 126 A1**
(43) Date of publication of application: **10.06.2026**
(21) Application number: 25151042.6
(22) Date of filing: 09.01.2025
(51) Int. Cl.: H02K 1/30, H02K 1/2791, H02K 5/173, H02K 7/14, B25F 5/02, H02K 9/02, H02K 21/22

(54) **EXTERNAL ROTOR MOTOR AND HAND-HOLD POWER TOOL USING THE SAME**

(30) Priority: 09.12.2024 TW 113147660
(71) Applicant: Tranmax Machinery Co., Ltd., Taichung City 412 (TW)
(72) Inventor: CHEN, HSIN-CHI, 412 TAICHUNG CITY (TW)
(74) Representative: Straus, Alexander

(57) **Abstract**

An external rotor motor (100) includes a connecting seat (10) having an end frame (11), a hollow tube (13) connected to the end frame (11) and provide with a passage (131), and a hollow cylindrical body (15) connected to the end frame (121) and having multiple coupling portions (153) and forming an open space (17) communicating with the passage (131) with the end frame (110 and the hollow tube (13). A stator module (20) is connected to the hollow tube (13) and located inside the open space (17). A rotary shaft (30) is inserted in the passage (131) and has two ends protruding out of the hollow tube (13). One of the two ends of the rotary shaft (30) is located outside the hollow cylindrical body (15). A support member (40) is connected to the rotary shaft (30) and located inside the passage (131). A rotor module (50) is inserted in the open space (17) and has a coupling end cover (51) connected to the rotary shaft (30) and exposed outside the open space (17).

## Description

### BACKGROUND OF THE INVENTION

### 1. Field of the Invention

The present invention relates to a motor of a power tool and more particularly, to an external rotor motor and a power tool using the aforesaid external rotor motor.

### 2. Description of the Related Art

CN 116094276 A discloses an external rotor motor, which forms blades on the annular wall of the housing of the external rotor assembly to enhance the heat dissipation effect. However, due to the gaps or holes between the blades, foreign objects or dust can easily fall in, leading to dust accumulation on the surface of the magnets, which affects the operating performance of the motor.

Additionally, TW I781070 discloses a pulse-type power tool drive and trigger stop device, where the electric drive mechanism is an outer rotor motor. Since the rotor of the external rotor motor is exposed and has a relatively long structure, in order to stably secure it within the housing of the power tool, the patent requires the use of a coupling bearing to support the second extension section of the external rotor. This is to prevent the external rotor motor from generating excessive vibrations, which increases assembly difficulty and cost.

### SUMMARY OF THE INVENTION

It is one objective of the present invention to provide an internal rotor motor, which can be easily assembled with a power tool and can simplify the connection with a tool head of the power tool.

To attain the above objective, the external rotor motor of the present invention comprises a connecting seat, a stator module, a rotary shaft, a support member, and a rotor module. The connecting seat includes an end frame, a hollow tube connected to the end frame and having a passage, and a hollow cylindrical body connected to the end frame and forming an open space with the end frame and the hollow tube. The open space communicates with the passage. The stator module is connected to the hollow tube and located inside the open space. The rotary shaft is inserted in the passage, and two ends of the rotary shaft protrude out of the hollow tube. One of the two ends of the rotary shaft is located outside the hollow cylindrical body. The support member is connected to the rotary shaft and located inside the passage. The rotor module is inserted in the open space and includes a coupling end cover connected to the rotary shaft and exposed outside the open space. The stator module is used for driving the rotor module to rotate relative to the connecting seat, and the hollow cylindrical body has a plurality of coupling portions.

It can be seen from the above that the external rotor motor of the present invention provides an external connection through the coupling portions of the hollow cylindrical body of the connecting seat, making the assembly of the external rotor motor simpler. Furthermore, the hollow cylindrical body can also increase the heat dissipation area and prevent foreign objects from entering the rotor module, thereby enhancing the reliability of the external rotor motor.

To attain the above objective, the power tool of the present invention comprises a housing, a tool head, a fan, and the aforesaid external rotor motor. The housing includes a plurality of positioning portions. The tool head and the fan are installed in the housing. The external rotor motor is installed in the housing and located between the tool head and the fan. The coupling portions of the hollow cylindrical body are coupled to the positioning portions of the housing, and the rotor module is connected to the tool head.

It can be seen from the above that the external rotor motor can be directly coupled with the positioning portions of the housing to simplify the assembly complexity and reduce the number of components used, thereby improving assembly efficiency.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of an external rotor motor of the present invention.
FIG. 2 is a perspective view of the external rotor motor of the present invention from different angles.
FIG.3 is an exploded view of the external rotor motor of the present invention.
FIG. 4 is a sectional view of a hollow cylindrical body provided by the external rotor motor of the present invention.
FIG. 5 is a sectional view of the external rotor motor of the present invention.
FIG.6 is an exploded view of a rotor module provided by the external rotor motor of the present invention.
FIG. 7 is a perspective view of FIG. 6.
FIG. 8 is a schematic drawing of the external rotor motor of the present invention applied to a power tool.

### DETAILED DESCRIPTION OF THE INVENTION

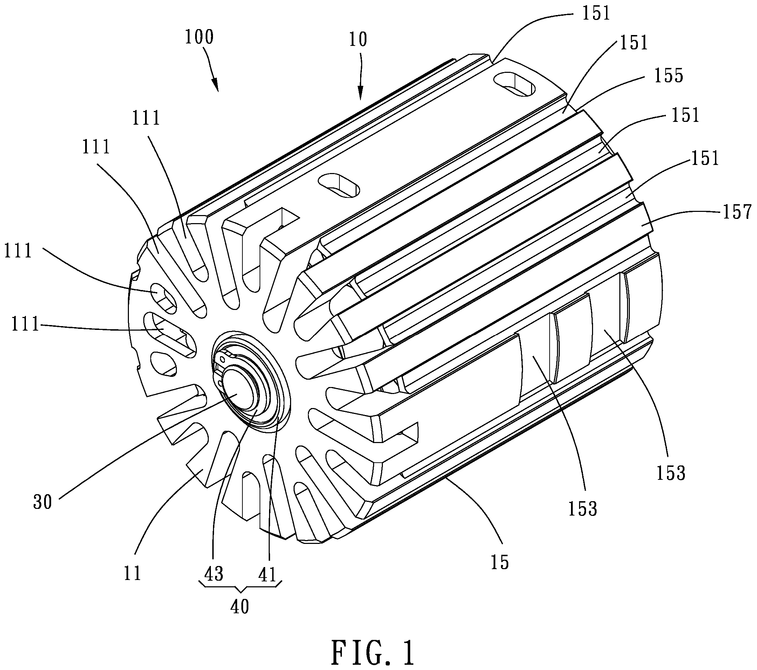

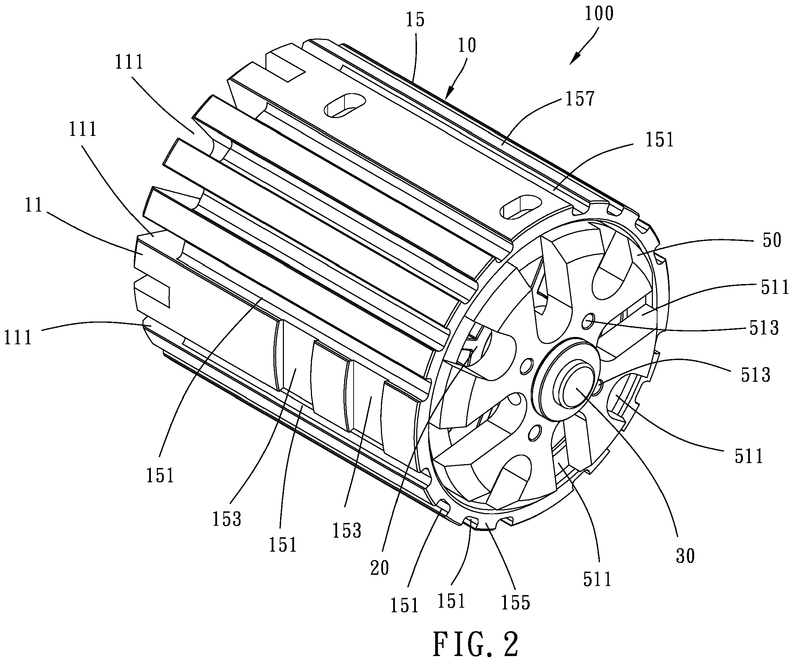

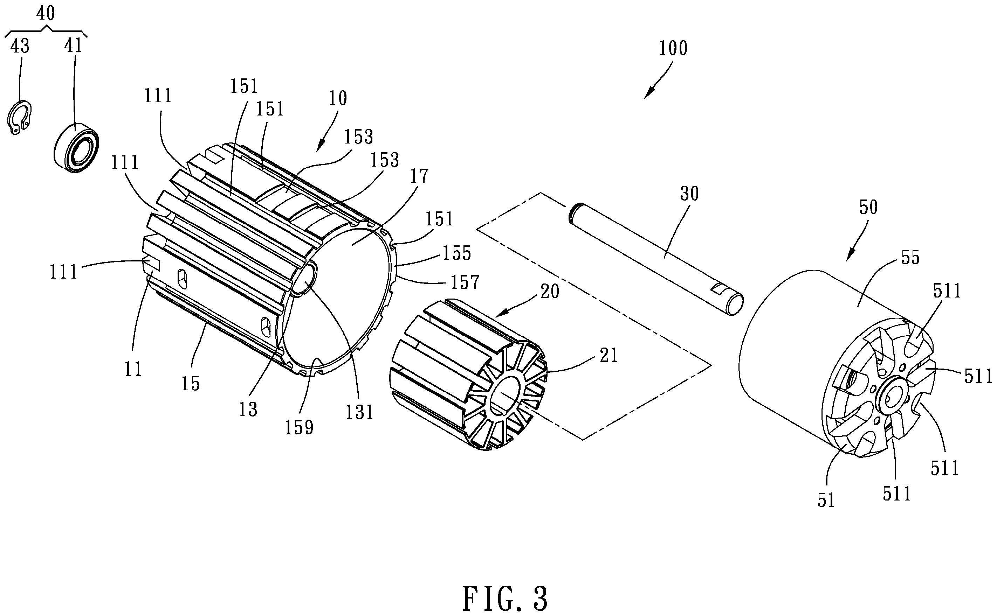

Referring to FIGS. 1 to 3, an external rotor motor 100 of the present invention comprises a connecting seat 10, a stator module 20, a rotary shaft 30, a support member 40, and a rotor module 50.

The connecting seat 10 includes an end frame 11, a hollow tube 13, and a hollow cylindrical body 15. The end frame 11 is connected to the hollow tube 13. The hollow tube 13 has a passage 131. The hollow cylindrical body 15 is connected to the end frame 11 and forms an open space 17 with the end frame 11 and the hollow tube 17. In this embodiment, the end frame 11 is located at one end of the hollow cylindrical body 15. In other embodiment, the end frame 11 can also be disposed inside the hollow cylindrical body 15.

The end frame 11 has a plurality of heat dissipation ports 111 communicating with the open space 17. The hollow cylindrical body 15 has a plurality of grooves 151 and four coupling portions 153. The groove 151 extends from a free end 155 of the hollow cylindrical body 15 to the end frame 11, and the groove 151 is arranged on the outside 157 of the hollow cylindrical body 15 for increasing the heat dissipation area. The free end 155 and the end frame 11 are located at two opposite sides of the hollow cylindrical body 15. The inner surface 159 of the hollow cylindrical body 15 is a complete arc surface, meaning there are no openings, which defines the range of the open space 17 and prevents external dust or foreign objects from falling in from the outside 157.

In this embodiment, the connecting seat 10 is an integrally formed metal (such as aluminum or aluminum alloy) structure to provide better thermal conductivity and better structural strength. The grooves 151 are connected to the heat dissipation ports 111. The coupling portions 153 are paired in sets of two and are located in symmetrical positions. FIGS. 1 to 3 show two of the coupling portions 153, while the other two are positioned at the opposite side. The coupling portion 153 is a concavity, that is, a structure recessed from the outside 157 of the hollow cylindrical body 15, making the coupling portion 153 communicate with the adjacent groove 151. In other embodiment, the coupling portion 153 can be other structure, such as a protrusion or other structure that can be fixed and positioned. The number of the coupling portion 153 can also be more or less.

The stator module 20 is fixedly connected with the hollow tube 13 and located inside the open space 17. The stator module 20 includes a stator core 21 and stator windings (not shown) wound around the stator core 21.

The rotary shaft 30 is inserted in the passage 131. The rotary shaft 30 is a long straight metal rod and has two ends protruding out of the hollow tube 13 and located outside the hollow cylindrical body 15.

The support member 40 is connected with the rotary shaft 30 and located inside the passage 131. In this embodiment, the support member 40 includes a bearing 41 sleeved on the rotary shaft 30 and a fastener 43 fastening the rotary shaft 41 to position the bearing 41 and prevent the bearing 41 from being separated from the rotary shaft 30.

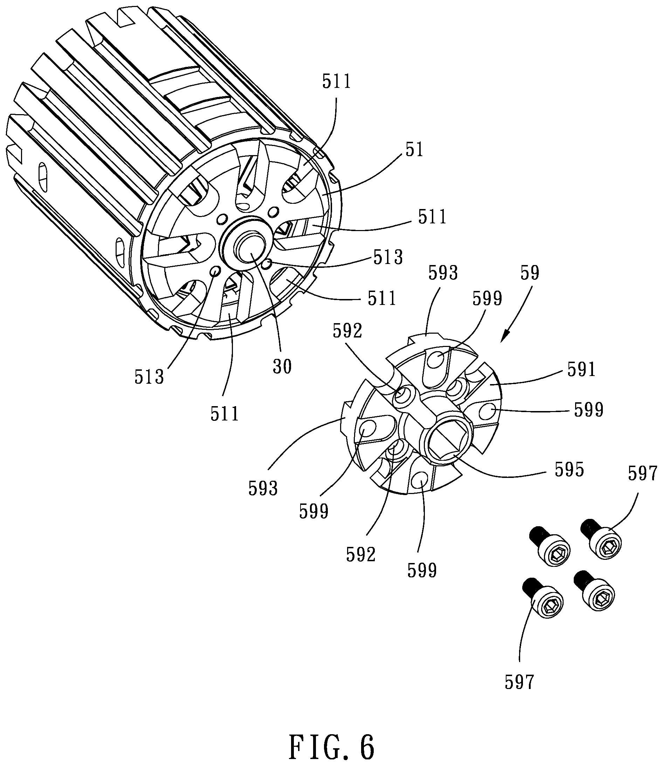

The rotor module 50 is inserted in the open space 17 and includes a coupling end cover 51 connected to the rotary shaft 30 and exposed outside the open space 17. The coupling end cover 51 has eight ventilation ports 511 communicating with the open space 17 and four threaded holes 513 used for screwing to an adapter 595 or a tool head 63. The adapter 595 is used for coupling the tool head 63. Then it is explained in FIG. 6.

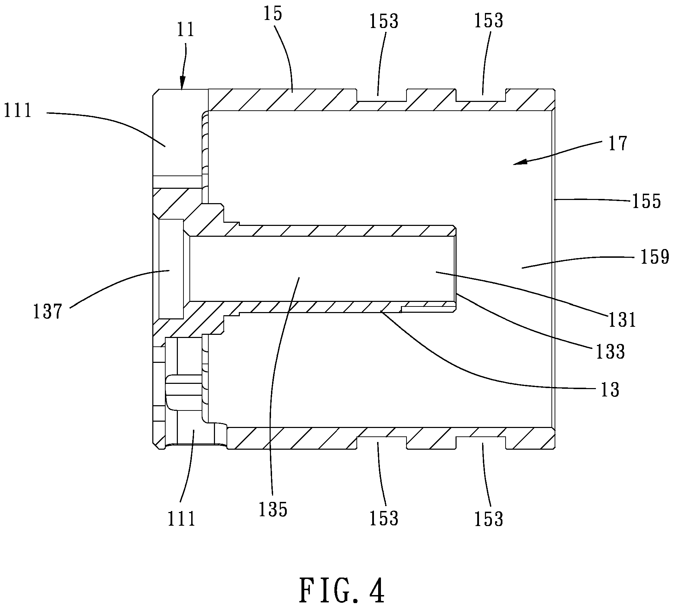

As shown in FIG. 4, the coupling portions 153 are symmetric structures. The hollow cylindrical body 15 and the end frame 11 are roughly vertical to each other. The length of the hollow tube 13 is shorter than that of the hollow cylindrical body 15. That is to say, a free end 133 of the hollow tube 13 is located inside the open space 17. Additionally, the passage 131 has a straight extending section 135 and an expanding section 137 that communicate with each other. The straight extending section 135 extends from the free end 133 to the expanding section 137. The expansion section 137 is used to accommodate the support member 40.

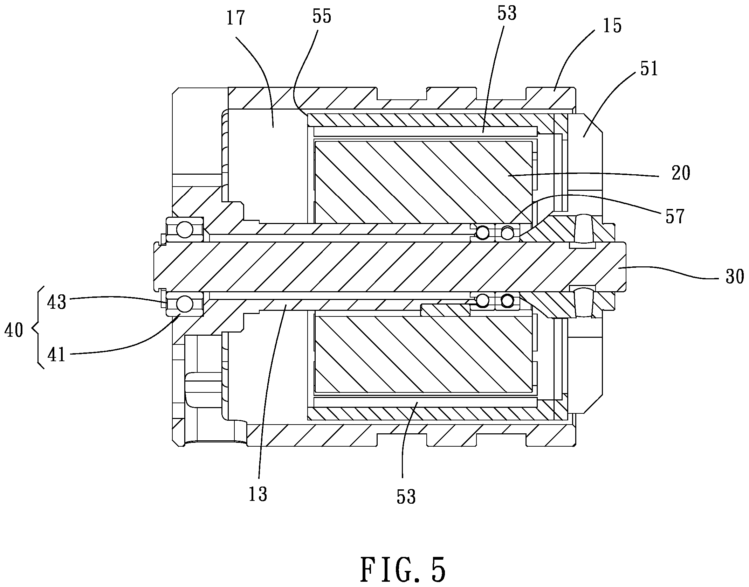

As shown in FIG. 5, the rotor module 50 further includes a plurality of magnets 53, a hollow sleeve 55, and a rotor bearing 57. The hollow sleeve 55 is connected to the coupling end cover 51 and located inside the open space 17 and spacedly disposed between the hollow cylindrical body 15 and the stator module 20. The magnets 53 are connected to the hollow sleeve 55 and spacedly face the stator module 20. The magnets 53 are located inside the hollow sleeve 55 and arranged in a spaced manner. The magnetic poles of the adjacent magnets 53 are different. The rotor bearing 57 is connecting to the rotary shaft 30 and the stator module 20 and located between the coupling end cover 51 and the hollow tube 13. In this way, the rotor bearing 57 and the bearing 41 of the support member 40 provide two support points to stabilize the rotor shaft 30, allowing the rotor module 50 to rotate stably and prevent vibration.

Thus, the stator module 20 is fixed in the hollow tube 13 of the connecting seat 10 and does not be rotated. When the stator module 20 is energized, it generates a magnetic field that interacts with the magnetic field generated by the magnets 53 of the rotor module 50, thereby generating torque to cause the rotor module 50 to rotate.

As shown in FIGS. 6-7, the rotor module 50 further includes an adapter seat 59 connected to the coupling end cover 51 and provided with a disk body 591, a plurality of engaging portions 593, an adapter 595, and four bolts 597.

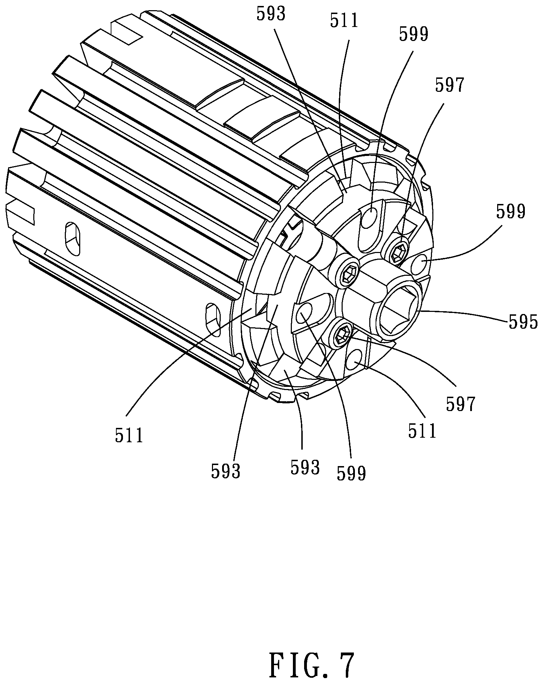

The disk body 591 is formed on the coupling end cover 51. The engaging portions 593 are formed on the disk body 591 and engaged with limiting portions of the coupling end cover 51. In this embodiment, the engaging portion 593 is a tooth that protrudes from the right side (as shown in FIG. 7) of the disk body 591. The limiting portion of the coupling end cover 51 is a part of the ventilation port 511, allowing the teeth to be roughly engaged with the ventilation ports 511 (as shown in FIG.7). The teeth do not completely cover the ventilation ports 511, preserving the heat dissipation channel.

In other embodiment, the engaging portions 593 each have a perforation 599 passing through the disk body 591 for heat dissipation. The number of the engaging portion 593 and the number of the limiting portion can be increased or decreased simultaneously, and there can be at least one. The engaging portion 593 and the limiting portion are mainly used to mesh with each other to enhance the structural stability during the rotation of the rotor. Therefore, the engaging portion 593 and the limiting portion can be other types of structures that can be meshed with each other, and the limiting portion can also be combined with other structure of the coupling end cover 51. The limiting portion is not limited to the ventilation port 511.

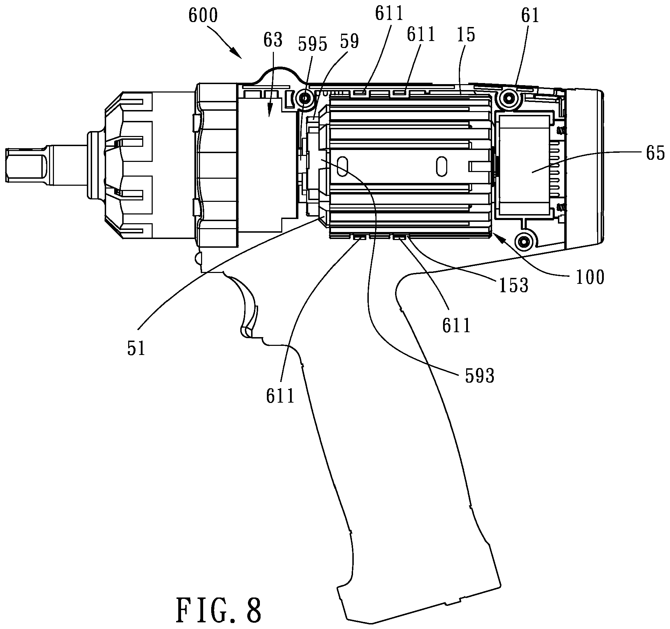

The adapter 595 protrudes out of the disk body 591 and is located on the left side (as shown in FIG 8.) of the disk body 591. The adapter 595 and the engaging portions 593 are positioned on opposite sides of the disk body 591. In this embodiment, the adapter 595 is a hollow hexagonal head directly facing the rotary shaft 30 for combining with the tool head 63 of a power tool 600. The bolts 597 are screwed to the threaded holes 513 of the coupling end cover 51 through four threaded holes 592 of the disk body 591 for securing the adapter seat 59 to the coupling end cover 51.

As shown in FIG. 8, the power tool 600 comprises a housing 61, a tool head 63, a fan 65, and the aforesaid external rotor motor 100. The housing 61 includes a plurality of positioning portions 611 located inside the housing 61 and formed by convex structures to cooperate with concave structures of the coupling portion 153 for positioning. In order to clearly show the inside of the housing 61 in FIG. 8, one side of the housing 61 is omitted. The external rotor motor 100 is installed in the housing 61 and located between the tool head 63 and the fan 65. The coupling portions 153 of the hollow cylindrical body 15 are coupled to the positioning portions 611 to securely position the external rotor motor 100, making the assembly simpler compared to prior art. The tool head 63 is connected to the adapter 595 of the adapter seat 59. The tool head 63 is a mechanism that transmits and outputs torque through the rotational power of the external rotor motor 100. The tool head 63 can be applied in various forms, such as hex quick-release couplings, screwdriver heads, drill bits, wrenches, and other tool attachments.

As such, due to the fact that the adapter seat 59 of the rotor module 50 is engaged with the limiting portions of the coupling end cover 51 through the engaging portions 593, it provides a more stable structure for preventing the bolts 597 from loosening due to the rotational torque. In other embodiment, when the output torque is relatively small, the tool head 63 can also be directly connected to the coupling end cover 51 of the rotor module 50 or the engaging portions 593 of the adapter seat 59 can be omitted.

In other embodiment, the external rotor motor 100 of the present invention can also be applied to other environments that require rotational torque, and is not limited to the power tool.

## Claims

1. An external rotor motor (100) **characterized in that** comprising:
a connecting seat (10) including an end frame (11), a hollow tube (13) connected to the end frame (11) and having a passage (131), and a hollow cylindrical body (15) connected to the end frame (11) and forming an open space (17) with the end frame (11) and the hollow tube (13), the open space (17) communicating with the passage (13);
a stator module (20) connected to the hollow tube (13) and located inside the open space (17);
a rotary shaft (30) inserted in the passage (131), two ends of the rotary shaft (30) protruding out of the hollow tube (13), one of the two ends of the rotary shaft (30) being located outside the hollow cylindrical body (15);
a support member (40) connected to the rotary shaft (30) and located inside the passage (131); and
a rotor module (50) inserted in the open space (17) and including a coupling end cover (51) connected to the rotary shaft (30) and exposed outside the open space (17);
wherein the stator module (20) drives the rotor module (50) to rotate relative to the connecting seat (10), and the hollow cylindrical body (15) has a plurality of coupling portions (153).

2. The external rotor motor (100) as claimed in claim 1, **characterized in that** the end frame (11) has a plurality of heat dissipation ports (111) communicating with the open space (17); the hollow cylindrical body (15) has a plurality of grooves (151) extending from a free end (155) of the hollow cylindrical body (15) to the end frame (11) and arranged on an outside (157) the hollow cylindrical body (15); the free end (155) and the end frame (11) are located at two opposite sides of the hollow cylindrical body (15).

3. The external rotor motor (100) as claimed in claim 2, **characterized in that** the grooves are connected with the heat dissipation ports.

4. The external rotor motor (100) as claimed in claim 2, **characterized in that** each of the coupling portions (153) is a recess communicating with the adjacent groove (151).

5. The external rotor motor (100) as claimed in claim 2, **characterized in that** an inner surface (159) of the hollow cylindrical body (15) is a complete arc surface to define the open space (17).

6. The external rotor motor (100) as claimed in claim 1, **characterized in that** the coupling end cover (51) has a limiting portion; the rotor module (50) includes an adapter seat (59) connected with the coupling end cover (51) and having a disk body (591), an engaging portion (593) formed on the disk body (591) and engaged with the limiting portion, and an adapter (595) protruding from the disk body (591) and facing away from the engaging portion (593).

7. The external rotor motor (100) as claimed in claim 6, **characterized in that** the coupling end cover (51) has a plurality of ventilation ports (511) communicating with the open space (17); the limiting portion is one of the ventilation ports (511); the engaging portion (593) has a perforation (599) communicating with the ventilation port (511).

8. The external rotor motor (100) as claimed in claim 1, **characterized in that** the rotor module (50) further includes a hollow sleeve (55) connected to the coupling end cover (51) and located inside the open space (17) and spacedly disposed between the hollow cylindrical body (15) and the stator module (20), a plurality magnets (53) connected to the hollow sleeve (55) and spacedly facing the stator module (20), and a rotor bearing (57) connecting to the rotary shaft (30) and the stator module (20) and located between the coupling end cover (51) and the hollow tube (13).

9. The external rotor motor (100) as claimed in claim 1, **characterized in that** the support member (40) is close to the end frame (11) of the connecting seat (10).

10. A power tool (600) **characterized in that** comprising:
a housing (61) including a plurality of positioning portions (611);
a tool head (63) installed in the housing (61);
a fan (65) installed in the housing (61); and
an external rotor motor (100) as claimed in any one of claims 1 to 9 installed in the housing (610 and located between the tool head (63) and the fan (65), the coupling portions (153) of the hollow cylindrical body (15) being coupled to the positioning portions (611) of the housing (61), the rotor module (50) being connected to the tool head (63).
